# EUROPEAN PATENT SPECIFICATION

(11) **EP 0 571 125 B1**
(45) Date of publication and mention of the grant of the patent: **22.07.1998**
(21) Application number: 93303650.1
(22) Date of filing: 11.05.1993
(51) Int. Cl.: H04M 11/06, H04L 29/06

(54) **Data processing terminals with modem communications**
Datenverarbeitungsendgeräte mit Modem-Kommunikation
Terminaux de traitement de données avec communications par modem

(30) Priority: 21.05.1992 US 887440
(43) Date of publication of application: 24.11.1993
(73) Proprietor: International Business Machines Corporation, Armonk, N.Y. 10504 (US)
(72) Inventor: Jenness, Robert Vincent, Boca Raton, Florida 33486 (US); Maguire, Sandra Arlene, Boca Raton, Florida 33433-3641 (US); Moore, Victor Stuart, Delray Beach, Florida 33484 (US); Wu, David C., Boca Raton, Florida 33434 (US)
(74) Representative: Burt, Roger James, Dr.

(56) References cited:
- EP-A- 0 368 055
- WO-A-91/07044
- WESCON TECHNICAL PAPERS vol. 29, no. 14/3, November 1985, NORTH HOLLYWOOD US pages 1 - 7 S. J. DURHAM 'ADVANCED FEATURES FOR HIGH SPEED DIAL UP MODEMS'
- MINI MICRO CONFERENCE RECORD no. 15/2, 1984, NEW YORK US pages 1 - 13 S. J. DURHAM 'INTELLIGENT 212A-TYPE MODEM COMPONENT'

## Description

The present invention relates to communication in a distributed data processing system and in particular to methods and systems for the control of modem operation in such a data processing system.

Data communication between modern computer devices is typically accomplished utilizing a modulator/demodulator or so-called "modem" which is utilized to convert digital signals within a data processing system to analog signals for transmittal over existing communication links. Additionally, such devices convert received analog signals to digital signals for utilization by a data processing system. In the past, most distributed computer networks have been coupled together utilizing existing telephone land line systems or specialized wiring; however, modern distributed data processing systems often utilize more sophisticated means of communication.

For example, the decreasing cost of cellular communication equipment has resulted in the utilization of that technology to couple together computers without the necessity of access to a telephone line outlet. This particular technology is particularly effective in combination with small portable battery powered laptop or notebook computers in which the necessary modem and cellular communication circuitry are miniaturized and provided in an integral fashion within the computer itself. Thus, an operator utilizing such a computer may initiate communications and transfer data between his or her computer and a distributed data processing system without the necessity of access to either telephone lines or power lines. Examples of such portable computers include the International Business Machines Corporation L40SX and the Model No. 9075 PCradio, which may be utilized for wireless communication by attaching a radio device. Radio devices, such as a cellular telephone, or ARDIS radio devices may be utilized.

These radio devices communicate with the portable computer via a conventional communication port. These devices are typically configured and controlled in the same manner as a Hayes compatible modem. For example, a series of preselected commands, typically known as "AT" commands may be utilized to set internal parameters for these devices and instruct the devices in operation (as described in "Advanced Features for High Speed Dial Up Modems" by S Durham, 8080 Wescon Proceedings, San Francisco, CA, Nov 19-22, 1985 (p1-7 Nov. 1985)). Known modems or combination modem/radio systems typically operate in one of two different modes of operation.In a first mode of operation, the device recognizes all characters transmitted to the device as commands. This mode of operation is referred to as the "command mode." The other mode treats characters received at the device as data to be transmitted via a communications link. This mode of operation is referred to as the data mode. Typically, a special sequence of data bytes may be utilized to toggle the device from the data mode to the command mode. Generally this sequence consists of one second with no data followed by the key sequence "+++," followed by another second of no data.

This manner of transferring data back and forth between command and data modes of operation has proven to be adequate for devices which communicate via telephone land lines and cellular telephone systems. However, it is increasingly common in a modern data processing system for each data processing terminal, or host computer to support multiple applications within each terminal. In this so-called "multi-tasking" environment, an application within a particular data processing terminal is established in a so-called "communications session" with a corresponding application within a host or other data processing terminal. In this manner, a user may run two or more simultaneous applications,greatly enhancing the efficiency of the interface between the user at his or her terminal and the data processing system.

While this technique is greatly advantageous, its use is currently limited to data processing terminals within networks wherein the access of the terminal to the network is fixed. That is, this technique is not generally available in networks in which the terminal is typically linked to the network utilizing a modem device. This is due to the fact that the terminal is connected to the modem device via a so-called "communication port" and there exists no method or system other than the use of multiple communication ports, which may be utilized to support multiple communications sessions. Multiple applications may be simultaneously active in such a system; however, the data packets received by the modem device must be passed directly from the host to the data processing terminal where those applications must be sorted by the terminal applications which are currently active. This solution forces the applications at the data processing terminal to have specialized knowledge regarding system data packet protocols and formats.

Thus a need exists for a method and system whereby multiple communication sessions may be established and maintained utilizing a modem controlled system, without the degree of processing overhead associated with attempts to implement this solution in the prior art.

EP-A-368055 describes a method for communicating with a plurality of hosts connected to an X.25 network and for selectably using a character as a control character or a data character. The method allows simultaneous communication with a plurality of X.25 hosts over a single telephone line or physical transmission link.

Accordingly, the invention provides a method for controlling multiple communication sessions between first and second data processing terminals coupled together via at least one modem;
characterised by said method comprising the steps of:
providing said modem with a data transfer mode and a command mode;
during a first communication session between said first and second data processing terminals, sending a stream of data from said first data processing terminal to said modem while said modem is operating in said data transfer mode;
selectively inserting within said stream of data a preselected escape character followed by a selected command sequence; and
automatically initiating a second communication session between said first and second data processing terminals in response to said selected command sequence, while said modem continues to operate in said data transfer mode.

Such a method enhances the efficiency of modem operation in a distributed data processing system by permitting multiple communication sessions to be controlled by a modem device during data transfer within a distributed data processing system.

In a preferred embodiment the selected command sequence includes a selected session identification command sequence wherein selected data within said stream of data following said selected session identification command sequence may be automatically associated with a particular communication session.

Preferably the method further comprises the steps of:
selectively inserting within said data stream a preselected escape character followed by a second selected command sequence; and automatically terminating a particular communication session between said first data processing terminal and said second data processing terminal in response to said second selected command sequence while said modem continues to operate in said data transfer mode.

Thus multiple communication sessions can be set up using just a single modem and a single communications port, and data directed to the correct session.

It is also preferred that the method further includes the step of detecting each occurrence of said preselected escape character within said stream of data not followed by a selected command sequence and inserting a second preselected escape character following each such occurrence. This pair of escape characters is then interpreted as a single escape character in the original data stream and allowed to pass, rather than the start of a selected command sequence.

Preferably each selected command sequence includes a preselected termination character.

The invention further provides a data processing system for controlling multiple communication sessions between first and second data processing terminals coupled together via at least one modem, and characterised in that said modem has a data transfer mode and a command mode, and said data processing system comprises:
means for sending a stream of data from the first data processing terminal to said modem during a first communication session between said first and second data processing terminals, while said modem is operating in said data transfer mode;
means for selectively inserting within said stream of data a preselected escape character followed by a selected command sequence;
and means for automatically initiating a second communication session between said first and second data processing terminals in response to said selected command sequence, while said modem continues to operate in said data transfer mode.

Thus first and second data terminals are linked for communication using at least one mode. The modem is coupled to a single communication port. A stream of data is supplied to the modem, which has a data transfer mode and a command mode while that modem is operating in the data transfer mode in a first communication session. A preselected escape character followed by a selected command sequence may be inserted into the data stream and is detected and utilized by the modem to automatically initiate a second communication session by specifying the network, node, application, service level and the like for the second communication session. Thereafter, selected data within the data stream may be preceded by the preselected escape character and a session identification command sequence and thereby accurately identified as associated with a particular communication session,without requiring the data processing terminal application to have knowledge of data packet protocols and formats. In this manner, a single modem coupled to a single communication port within a data processing terminal may be utilized to support multiple communication sessions without adding to the processing overhead within each application supported.

An embodiment of the invention will now be described by way of example with reference to the following drawings:
Figure 1 is a partially schematic pictorial representation of a distributed data processing;
Figure 2 is a partial high level block diagram of a computer within the distributed data processing system of Figure 1;
Figure 3 is a high level block diagram of a modem/cellular telephone in accordance with the present invention;
Figure 4 is a pictorial representation of a datastream which includes preselected escape characters and session identification command sequences;
and Figure 5 is a high level logic flow-chart which depicts command processing in a modem during data transfer.

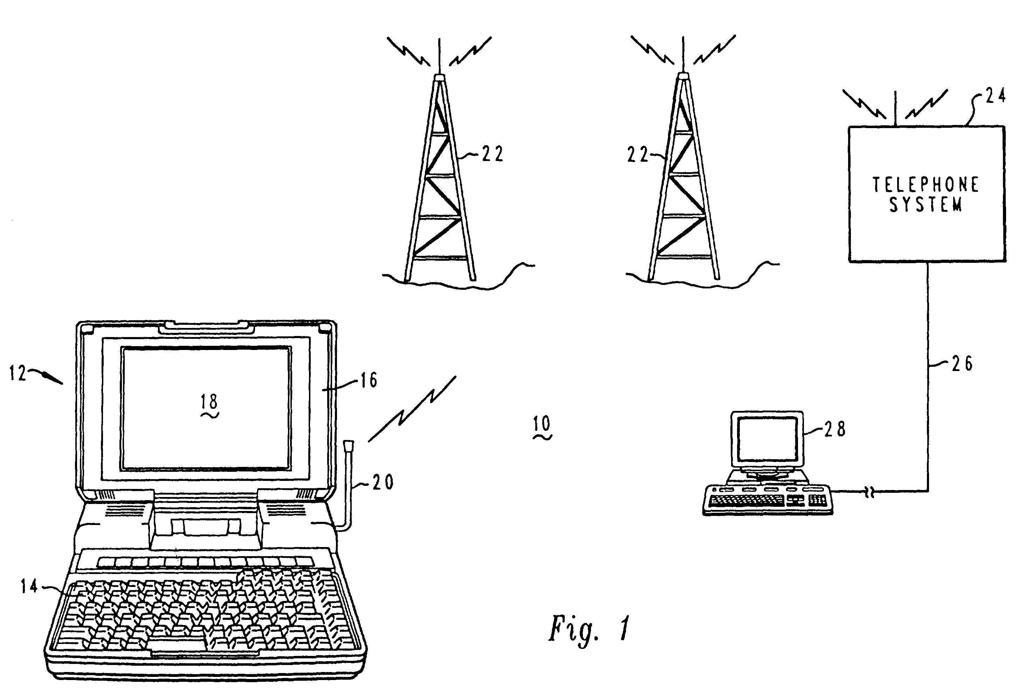

With reference now to the figures and in particular with reference to Figure 1, there is depicted a partially schematic pictorial representation of a distributed data processing system 10. Upon reference to the foregoing those skilled in the art will appreciate that while distributed data processing system 10 is illustrated as including only two computers, typically such distributed data processing systems include a large number of computers distributed over a wide geographic area. As illustrated, one of the computers within distributed data processing system 10 is a portable computer 12. Portable computer 12 is typically a battery powered computer which includes a low power display system 16 which preferably provides a display screen 18 which may be implemented utilizing a liquid crystal display (LCD), a gas plasma display or any other suitable technology. The keyboard 14 is provided which enables the user to access and modify data stored within portable computer 12 in a manner well known in the art.

As those skilled in the art will appreciate it is increasingly common for computers such as portable computer 12 to include therein a miniature cellular telephone system (not shown) which is provided in conjunction with a modem. One example of a portable computer equipped with a combination modem/cellular telephone which may be utilized to implement portable computer 12 is the International Business Machines Corporation Model 9075 PC radio. Those skilled in the art will appreciate that a modem is a device which may be utilized to convert digital data from a computer to an analog signal which may be transmitted via a telecommunications system. Additionally, such devices convert received analog signals from the telecommunications line to digital data which may be utilized by a computer. As is typical in such systems, a cellular telephone transmits a radio frequency signal via antenna 20 which may be received and relayed via multiple cellular system antennae 22. Thus, digital data within portable computer 12 may be converted into a series of analog signals and transmitted, via a cellular telephone system and multiple intervening repeaters to a telephone system 24, in a manner well known to those skilled in this art.

Analog signals thus transmitted may be received by the telephone system and transmitted, via an ordinary telephone land line 26 to a computer 28 within distributed data processing system 10. While computer 28 is depicted as a personal computer, those skilled in the art will appreciate that computer 28 may be implemented utilizing a workstation, terminal or mainframe computer, as desired. Typically, computer 28 will also include a modem device permitting data from portable computer 12 to be transmitted to and received by computer 28 and computer 28 may also be linked to portable computer 12 utilizing cellular technology, rather than telephone land lines.

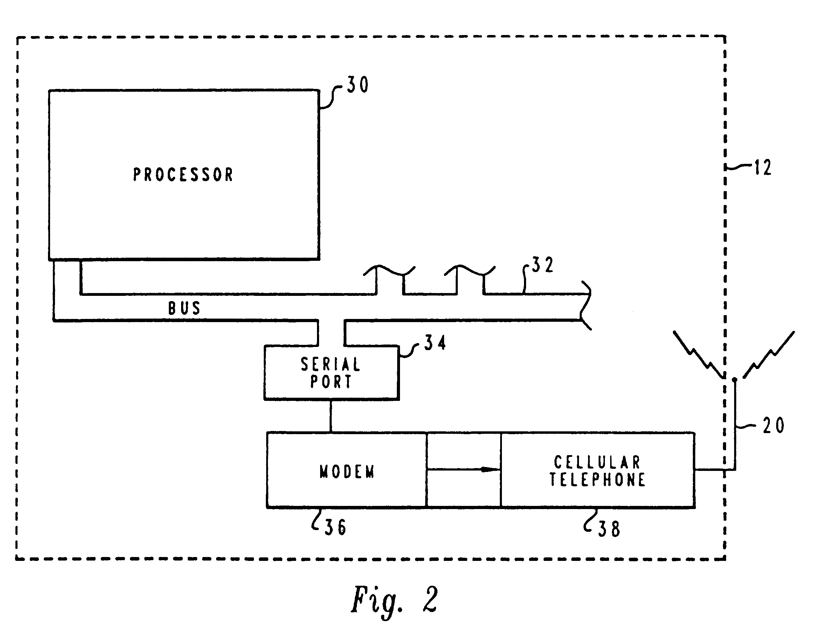

Referring now to Figure 2, there is depicted a partial high level block diagram of portable computer 12 within distributed data processing system 10 of Figure 1. As illustrated, portable computer 12 preferably includes a processor 30 which is coupled to a bus 32. Serial port 34, coupled to bus 32, is utilized to serialize data from processor 30 and couple that data to modem 36. Modem 36, as described above, converts that data into a series of analog signals which are coupled to cellular telephone 38 and transmitted, via antenna 20 in the manner described above. Of course, those skilled in the art will appreciate that in a modern portable computer modem 36 and cellular telephone 38 may be implemented utilizing a single subassembly within portable computer 12.

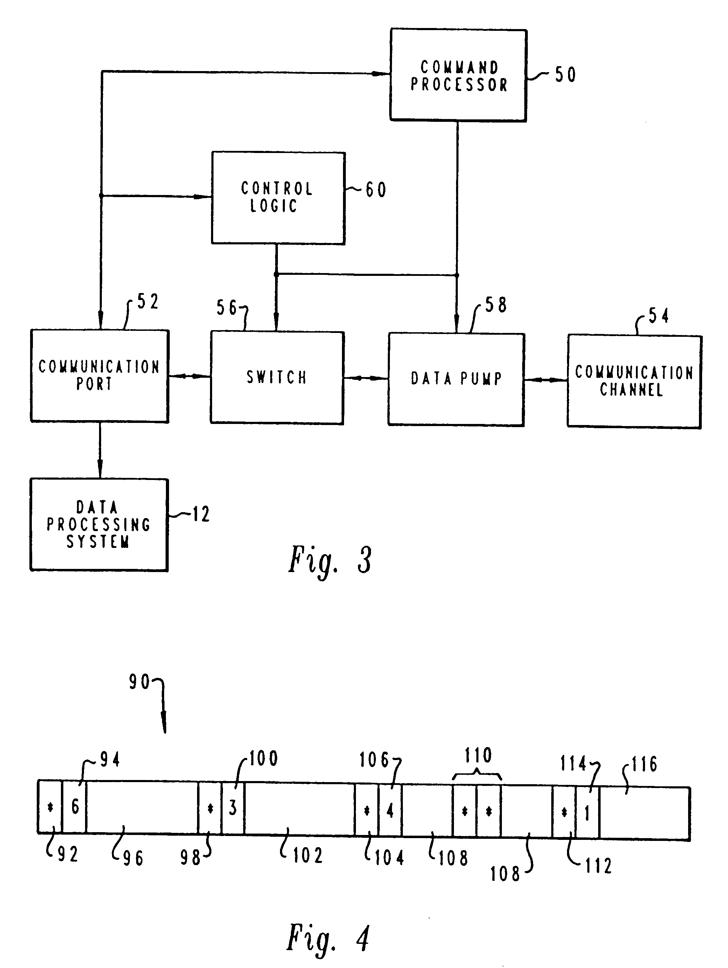

With reference now to Figure 3, there is depicted a high level block diagram of a modem/cellular telephone in accordance with the present invention. As is typical in such devices, the modem is coupled via communication port 52 to data processing system 12. In known combination modem/cellular telephone systems of this type, the digital data from the data processing system is converted to an analog signal and coupled to communication channel 54 via data pump 58. In the depicted embodiment two additional features, switch 56 and control logic 60 are provided. Switch 56 and control logic 60 are utilized to temporarily divert data within a data stream applied to the modem to the command processor 50. Command processor 50 is, as those skilled in the art will appreciate, typically present within each modem and utilized to decode and process the various commands which may be coupled to the modem while the modem is operating in the command mode.

As will be explained in greater detail herein, a designated escape character is selectively inserted into the data stream being coupled through the modem and, upon a detection of this designated escape character by control logic 60, switch 56 is utilized to couple the characters which follow the designated escape character to command processor 50, allowing the modem to process selected commands while maintaining operation in the data transfer mode. For example, in accordance with one embodiment new so-called "AT" commands may be defined and utilized to set the parameters necessary to establish and terminate communication sessions.

As illustrations, AT commands may be utilized to specify encryption type, compression type, network address, application address, service request type, service level type and session number. Additionally, a new AT command may be utilized to specify the escape character utilized to temporarily divert data within the data stream to command processor 50 in a manner described in detail herein. Further, specific AT commands may be utilized to initiate and terminate communication sessions by specifying the initiation or termination and a specific session number. In the depicted embodiment, it is contemplated that up to sixteen separate simultaneous communication sessions may be supported.

Thus, a designated escape character followed by a command sequence to initiate a communication session may be inserted within the data stream coupled to a modem and may be utilized to initiate a session in a manner equivalent to dialing a telephone company number, except that the telephone number is replaced by the desired network, node and application names. Following each command sequence will preferably be a preselected termination character, such as a carriage return. Thus, a preselected escape character followed by a command sequence may be utilized to initiate or terminate a communication session or to identify, in a manner which will be explained in greater detail below, data within the data stream which is to be associated with a particular communication session. The command sequence may be inserted within the data stream and processed while maintaining the modem in the data transfer mode, greatly enhancing the efficiency of the communication system utilizing such a technique.

Referring now to Figure 4, there is depicted a pictorial representation of a data stream which includes preselected escape characters and session identification command sequences. As pictorially illustrated, a data stream 90 is depicted. At reference numeral 92, a preselected escape character, "∗" has been inserted and is followed by a session identification command sequence 94 which identifies the data within frame 96 which immediately follows this command sequence as data associated with session 6 within the current communications set-up. Next, preselected escape character 98 is illustrated followed by a session identification command sequence 100 indicating that the data within frame 102 is associated with session 3. Similarly, preselected escape character 104, followed by session identification command sequence 106 illustrates that the data within frame 108 is associated with session 4.

An important feature is illustrated at reference numeral 110. That is, although the preselected escape character has been chosen as a character which appears a relatively few number of times within normal data stream communication, it is still possible that the preselected escape character may be present within the data. To prevent such an instance from creating confusion, a data stream to be transmitted is first scanned to detect each occurrence of the preselected escape character which does not precede a command sequence. Thereafter, a duplicate of that preselected escape character is inserted, indicating to the processor that the preselected escape character should be treated as a single character within the data stream, without special significance. Thereafter, preselected escape character 112, followed by command sequence 114, indicates that the data within frame 116 is to be associated with session 1. In this manner, those skilled in the art will appreciate that portions of a data stream coupled to a modem may be identified as associated with a particular communication session within a data processing network, without requiring the data processing terminal to be aware of or functional within data packet protocol and format.

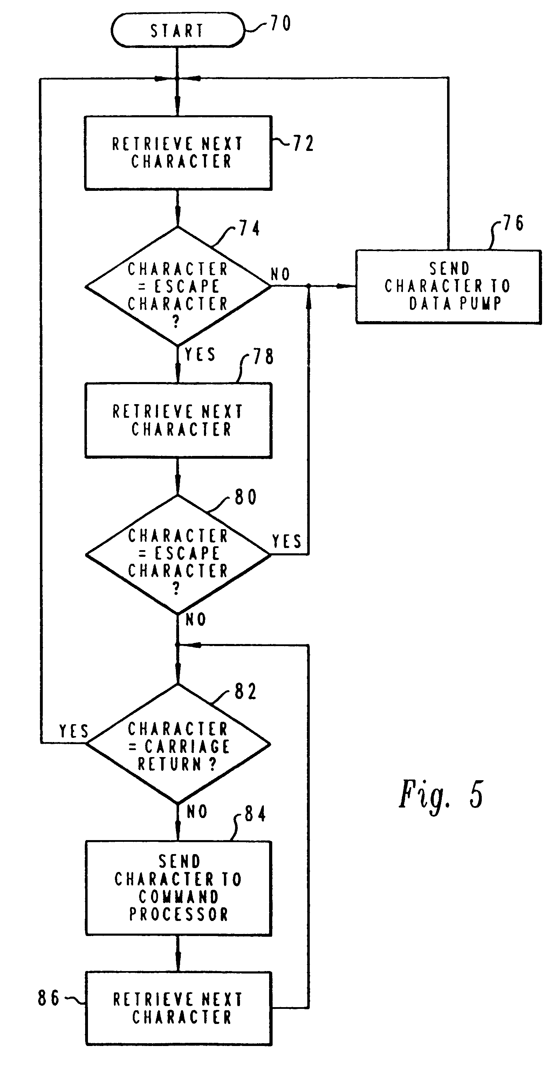

Referring now to Figure 5, there is depicted a high level flowchart which illustrates the processing of commands by a modem during data transfer. Of course, the process depicted within Figure 4 illustrates a data stream flowing from the data processing system to the communication channel; however, the identical process may be utilized in a data stream flowing from the communication channel to the data processing system.

The process, as illustrated, begins at block 70 and thereafter passes to block 72. Block 72 illustrates the retrieval of the next character within the data stream and the process then passes to block 74. Block 74 depicts a determination of whether or not the character retrieved is the designated escape character. As will become apparent to those skilled in the art upon reference to the foregoing, the designated escape character may be any character within the data processing system; however, the efficiency of the system will be greatly enhanced by selecting an escape character which is not often present within normal data stream transfers. For example, the "*" key may be utilized. It is anticipated that a selected AT command may be utilized to place the modem/cellular telephone system into a shared command/data state of operation and that a second command may thereafter be utilized to designate a selected escape character.

Referring again to block 74, in the event the character just retrieved is not the designated escape character, the process passes to block 76. Block 76 illustrates the transmittal of that character to the data pump for transmittal via the modem/cellular telephone system. However, in the event the character encountered is the designated escape character, as determined at block 74, the process passes to block 78.

Block 78 illustrates the retrieval of the next character and thereafter, the process passes to block 80. Block 80 depicts a determination of whether or not the next character retrieved is the designated escape character. This step in the process is utilized, as set forth above, to permit the transmittal of the designated escape character within an ordinary data stream context by searching out each occurrence of the designated escape character within the data stream which is not followed by a command sequence and inserting at that point a second occurrence of the designated escape character. Thus, the occurrence of two consecutive designated escape characters will indicate that a single escape character is to be transmitted to the data pump, as depicted at block 76 of Figure 4.

Referring again to block 80, in the event the next character retrieved is not the designated escape character, the process passes to block 82. Block 82 illustrates a determination of whether or not the next character is the designated termination character. In the depicted embodiment each command sequence which follows a designated escape character is terminated by utilizing a carriage return. However, any other unique character may be utilized to designate the termination of a command sequence which follows a designated escape character. If the next character is a carriage return, the process passes back to block 72 to retrieve the next character and begin transmitting data via the data pump until the next designated escape character occurs.

Referring again to block 82, in the event the next character encountered is not a carriage return, or alternate designated termination character, the process passes to block 84. Block 84 illustrates the transmittal of that character to the command processor and the process then passes to block 86. Block 86 illustrates the retrieval of the next character and the process then returns iteratively to block 82 until such time as the designated termination character occurs. In this manner, data within a data stream applied to the modem is continually analyzed to locate a designated escape character within that data stream and thereafter, the subsequent character is checked to determine if a duplicate designated escape character has been transmitted. In the event a second designated escape character has not been transmitted, the data which follows the designated escape character is continuously coupled to the command processor until such time as the designated termination character (a carriage return in the depicted embodiment) occurs. In this manner, selected command sequences may be coupled to the command processor 50 (see Figure 3) for processing without terminating the data transfer mode.

## Claims

1. A method for controlling multiple communication sessions between first and second data processing terminals (12, 28) coupled together via at least one modem (36);
characterised by said method comprising the steps of:
providing said modem with a data transfer mode and a command mode;
during a first communication session between said first and second data processing terminals, sending a stream of data from said first data processing terminal to said modem while said modem is operating in said data transfer mode;
selectively inserting within said stream of data a preselected escape character (92) followed by a selected command sequence; and
automatically initiating a second communication session between said first and second data processing terminals in response to said selected command sequence, while said modem continues to operate in said data transfer mode.

2. The method for controlling multiple communication sessions between two data processing terminals according to Claim 1, wherein said selected command sequence includes a selected session identification command sequence (94) wherein selected data within said stream of data following said selected session identification command sequence may be automatically associated with a particular communication session.

3. The method for controlling multiple communication sessions between two data processing terminals according to Claim 1 or 2, further comprising the steps of:
selectively inserting within said data stream a preselected escape character followed by a second selected command sequence; and automatically terminating a particular communication session between said first data processing terminal and said second data processing terminal in response to said second selected command sequence while said modem continues to operate in said data transfer mode.

4. The method for controlling multiple communication sessions between two data processing terminals according to any preceding Claim, further including the step of detecting each occurrence of said preselected escape character within said stream of data not followed by a selected command sequence and inserting a second preselected escape character following each such occurrence (110).

5. The method for controlling multiple communication sessions between two data processing terminals according to any preceding Claim, wherein each selected command sequence includes a preselected termination character.

6. A data processing system for controlling multiple communication sessions between first and second data processing terminals (12, 28) coupled together via at least one modem (36),
and characterised in that said modem has a data transfer mode and a command mode, and said data processing system comprises:
means for sending a stream of data from the first data processing terminal to said modem during a first communication session between said first and second data processing terminals, while said modem is operating in said data transfer mode;
means for selectively inserting within said stream of data a preselected escape character (92) followed by a selected command sequence;
and means for automatically initiating a second communication session between said first and second data processing terminals in response to said selected command sequence, while said modem continues to operate in said data transfer mode.

7. The data processing system according to Claim 6, wherein said selected command sequence includes a selected session identification command sequence (94) wherein selected data within said stream of data following said selected session identification command sequence may be automatically associated with a particular communication session.

8. The data processing system according to claim 6 or 7, further including:
means for selectively inserting within said stream of data a preselected escape character followed by a second selected command sequence; and
means for automatically terminating a particular communication session between said first data processing terminal and said second data processing terminal in response to said second selected command sequence while said modem continues to operate in said data transfer mode.

9. The data processing system according to any of Claims 6 to 8, further including means for detecting each occurrence of said preselected escape character within said stream of data not followed by a selected command sequence and means for inserting a second preselected escape character following each such occurrence (110).

10. The data processing system according to any of claims 6 to 9, wherein each selected command sequence includes a preselected termination character.

## Patentansprüche

1. Ein Verfahren zur Steuerung von Mehrfachkommunikationssitzungen zwischen ersten und zweiten Datenverarbeitungsendgeräten (12, 28), die über mindestens ein Modem (36) miteinander verbunden sind;
dadurch gekennzeichnet, daß das Verfahren Schritte enthält, um
das Modem mit einem Datenübertragungs- und einem Befehlsmodus zu versehen; um
während einer ersten Kommunikationssitzung zwischen den ersten und zweiten Datenverarbeitungsendgeräten einen Datenstrom von dem ersten Datenverarbeitungsendgerät an das Modem zu senden, während das Modem im Datenübertragungsmodus arbeitet; um
in den Datenstrom selektiv ein vorausgewähltes Escape-Zeichen (92) einzufügen, an das sich eine ausgewählte Befehlssequenz anschließt; und um
automatisch eine zweite Kommunikationssitzung zwischen den ersten und zweiten Datenverarbeitungsendgeräten als Reaktion auf diese ausgewählte Befehlssequenz aufzurufen, während das Modem weiterhin im Datenübertragungsmodus arbeitet.

2. Das Verfahren zur Steuerung von Mehrfachkommunikationssitzungen zwischen zwei Datenverarbeitungsendgeräten gemäß Anspruch 1, wobei die ausgewählte Befehlssequenz eine ausgewählte Sitzungsidentifikations-Befehlssequenz (94) enthält, wobei die ausgewählten Daten in diesem Datenstrom, die von der ausgewählten Sitzungsidentifikations-Befehlssequenz gefolgt werden, automatisch einer bestimmten Kommunikationssitzung zugeordnet werden können.

3. Das Verfahren zur Steuerung von Mehrfachkommunikationssitzungen zwischen zwei Datenverarbeitungsendgeräten gemäß Anspruch 1 oder 2, das außerdem Schritte enthält, um
in den Datenstrom selektiv ein vorausgewähltes Escape-Zeichen einzufügen, an das sich eine zweite ausgewählte Befehlssequenz anschließt; und um
automatisch eine bestimmte Kommunikationssitzung zwischen dem ersten Datenverarbeitungsendgerät und dem zweiten Datenverarbeitungsendgerät als Reaktion auf die zweite ausgewählte Befehlssequenz zu beenden, während das Modem weiterhin in diesem Übertragungsmodus arbeitet.

4. Das Verfahren, um Mehrfachkommunikationssitzungen zwischen zwei Datenverarbeitungsendgeräten gemäß einem vorhergehenden Anspruch zu übertragen, das außerdem den Schritt enthält, um das Vorhandensein des vorausgewählten Escape-Zeichens in dem Datenstrom festzustellen, an den sich keine ausgewählte Befehlssequenz anschließt und um ein zweites vorausgewähltes Escape-Zeichen bei festgestelltem Vorhandensein (110) einzufügen.

5. Das Verfahren zur Steuerung von Mehrfachkommunikationssitzungen zwischen zwei Datenverarbeitungsendgeräten gemäß einem vorhergehenden Anspruch, wobei die ausgewählte Befehlssequenz ein vorausgewähltes Schlußzeichen enthält.

6. Ein Datenverarbeitungssystem zur Steuerung von Mehrfachkommunikationssitzungen zwischen ersten und zweiten Datenverarbeitungsendgeräten (12, 28), die über mindestens ein Modem (36) miteinander verbunden sind,
und dadurch gekennzeichnet, daß das Modem einen Datenübertragungs- und einen Befehlsmodus hat, und wobei das Datenverarbeitungssystem enthält:
Mittel, um während einer ersten Kommunikationssitzung zwischen den ersten und zweiten Datenverarbeitungsendgeräten einen Datenstrom von dem ersten Datenverarbeitungsendgerät an das Modem zu senden, während das Modem im Datenübertragungsmodus arbeitet;
Mittel, um in den Datenstrom selektiv ein vorausgewähltes Escape-Zeichen (92) einzufügen, an das sich eine ausgewählte Befehlssequenz anschließt;
und Mittel, um automatisch eine zweite Kommunikationssitzung zwischen den ersten und zweiten Datenverarbeitungsendgeräten als Reaktion auf diese ausgewählte Befehlssequenz aufzurufen, während das Modem weiterhin im Datenübertragungsmodus arbeitet.

7. Das Datenverarbeitungssystem gemäß Anspruch 6, wobei die ausgewählte Befehlssequenz eine ausgewählte Sitzungsidentifikations-Befehlsequenz (94) enthält, wobei die ausgewählten Daten in diesem Datenstrom, die von der ausgewählten Sitzungsidentifikations-Befehlssequenz gefolgt werden, automatisch einer bestimmten Kommunikationssitzung zugeordnet werden können.

8. Das Datenverarbeitungssystem gemäß Anspruch 6 oder 7, das außerdem Mittel enthält, um
in den Datenstrom selektiv ein vorausgewähltes Escape-Zeichen einzufügen, an das sich eine zweite ausgewählte Befehlssequenz anschließt; und Mittel, um
automatisch eine bestimmte Kommunikationssitzung zwischen dem ersten Datenverarbeitungsendgerät und dem zweiten Datenverarbeitungsendgerät als Reaktion auf die zweite ausgewählte Befehlssequenz zu beenden, während das Modem weiterhin in diesem Übertragungsmodus arbeitet.

9. Das Datenverarbeitungssystem gemäß einem der Ansprüche 6 bis 8, das außerdem Mittel enthält, um das Vorhandensein des vorausgewählten Escape-Zeichens in dem Datenstrom festzustellen, an den sich keine ausgewählte Befehlssequenz anschließt und Mittel, um ein zweites vorausgewähltes Escape-Zeichen bei festgestelltem Vorhandensein (110) einzufügen.

10. Das Datenverarbeitungssystem gemäß einem der Ansprüche 6 bis 9, wobei die ausgewählte Befehlssequenz ein vorausgewähltes Schlußzeichen enthält.

## Revendications

1. Méthode pour contrôler de multiples sessions de transmission entre un premier et un deuxième terminaux de traitement de données (12, 28) couplés l'un à l'autre par le biais d'au moins un modem (36);
caractérisée en ce que ladite méthode comprend les phases qui consistent à:
munir ledit modem d'un mode de transfert des données et d'un mode de commande;
pendant une première session de transmission entre les dits premier et deuxième terminaux de traitement de données, envoyer un train de données du dit premier terminal de traitement de données au dit modem quand ledit modem fonctionne sous ledit mode de transfert de données;
insérer de manière sélective, dans ledit train de données, un caractère d'échappement présélectionnné (92), suivi par une séquence de commande choisie; et
lancer automatiquement une deuxième session de transmission entre les dits premier et deuxième terminaux de traitement de données en réponse à ladite séquence de commande choisie, tandis que ledit modem continue à fonctionner en mode de transfert de données.

2. Méthode pour contrôler de multiples sessions de transmission entre deux terminaux de traitement de données selon la revendication 1, où ladite séquence de commande choisie comprend une séquence choisie de commande d'identification des sessions (94) dans laquelle des données sélectées du dit train de données suivant ladite séquence choisie de commande d'identification des sessions peuvent être associées automatiquement à une session de transmission particulière.

3. Méthode pour contrôler de multiples sessions de transmission entre deux terminaux de traitement de données selon la revendication 1 ou 2, comprenant en outre les phases qui consistent à:
insérer de manière sélective, dans ledit train de données, un caractère d'échappement présélectionné, suivi par une deuxième séquence de commande choisie; et
mettre automatiquement fin à une session de transmission particulière entre ledit premier terminal de traitement de données et ledit deuxième terminal de traitement de données, en réponse à ladite deuxième séquence de commande choisie, pendant que ledit modem continue à fonctionner en mode de transfert de données.

4. Méthode pour contrôler de multiples sessions de transmission entre deux terminaux de traitement de données selon l'une quelconque des revendications précédentes, comprenant en outre la phase qui consiste à détecter chaque occurrence du dit caractère d'échappement présélectionné à l'intérieur du dit train de données où il n'est pas suivi par une séquence de commande choisie et, insérer un deuxième caractère d'échappement présélectionné à la suite de chacune de ces occurences (110).

5. Méthode pour contrôler de multiples sessions de transmission de données entre deux terminaux de traitement de données selon l'une quelconque des revendications précédentes, où chaque séquence de commande sélectionnée comprend un caractère de terminaison présélectionné.

6. Méthode pour contrôler de multiples sessions de transmission entre un premier et un deuxième terminaux de traitement de données (12, 28) couplés l'un à l'autre par au moins un modem (36),
et caractérisée en ce que ledit modem a un mode de transfert de données et un mode de commande, et en ce que ledit système de traitement des données comprend:
un moyen pour envoyer un train de données du premier terminal de traitement de données vers ledit modem, lors d'une première session de transmission entre les dits premier et deuxième terminaux de traitement des données, alors que ledit modem fonctionne sous ledit mode de transfert de données;
un moyen pour insérer de manière sélective, dans ledit train de données, un caractère d'échappement présélectionné (92) suivi d'une séquence de commande choisie;
et un moyen pour lancer automatiquement une deuxième session de transmission entre les dits premier et deuxième terminaux de traitement de données, en réponse à ladite séquence de commande choisie, pendant que ledit modem continue à fonctionner sous ledit mode de transfert de données.

7. Système de traitement de données selon la revendication 6, où ladite séquence de commande choisie comprend une séquence de commande d'identification des sessions sélectionnée (94) où des données choisies du dit train de données qui suivent ladite séquence choisie de commande d'identification des sessions peuvent être associées automatiquement à une session de transmission particulière.

8. Système de traitement de données selon la revendication 6 ou 7, comprenant en outre:
un moyen pour insérer de manière sélective, dans ledit train de données, un caractère d'échappement présélectionné, suivi par une deuxième séquence de commande choisie; et
un moyen pour automatiquement mettre fin à une session de transmission particulière entre ledit premier terminal de traitement de données et ledit deuxième terminal de traitement de données, en réponse à ladite deuxième séquence de commande sélectionnée, alors que ledit modem continue à fonctionner sous ledit mode de transfert de données.

9. Système de traitement de données selon l'une quelconque des revendications 6 à 8, comprenant en outre un moyen pour détecter chaque occurence du dit caractère d'échappement présélectionné dans ledit train de données, non suivie par une séquence de commande sélectionnée et, un moyen pour insérer un deuxième caractère d'échappement présélectionné à la suite de chacune de ces occurences (110).

10. Système de traitement de données selon l'une quelconque des revendications 6 à 8, où chaque séquence de commande sélectionnée comprend un caractère de terminaison présélectionné.
